# EUROPÄISCHE PATENTSCHRIFT

(11) **EP 2 926 103 B1**
(45) Veröffentlichungstag und Bekanntmachung des Hinweises auf die Patenterteilung: **15.01.2020**
(21) Anmeldenummer: 13788718.8
(22) Anmeldetag: 29.10.2013
(51) Int. Cl.: G01L 9/00, G01L 19/06

(54) **DRUCKMESSZELLE**
PRESSURE MEASURING CELL
CELLULE DE MESURE DE PRESSION

(30) Priorität: 28.11.2012 DE 102012111533
(43) Veröffentlichungstag der Anmeldung: 07.10.2015
(73) Patentinhaber: Endress+Hauser SE+Co. KG, 79689 Maulburg (DE)
(72) Erfinder: DREWES, Ulfert, 79379 Müllheim (DE); PONATH, Nils, 79539 Lörrach (DE); ROßBERG, Andreas, 79713 Bad Säckingen (DE); SCHMIDT, Elke, 79713 Bad Säckingen (DE)
(74) Vertreter: Andres, Angelika Maria
(86) Internationale Anmeldenummer: PCT/EP2013/072573
(87) Internationale Veröffentlichungsnummer: WO 2014/082807

(56) Entgegenhaltungen:
- US-A1- 2012 227 505

## Beschreibung

Die vorliegende Erfindung betrifft eine Druckmesszelle, welche eine elastische Messmembran aufweist, wobei die Messmembran auf einer ersten Seite mit einem ersten Druck und auf einer der ersten Seite abgewandten, zweiten Seite mit einem zweiten Druck beaufschlagbar ist, wobei die Messmembran in Abhängigkeit einer Differenz zwischen dem ersten Druck und dem zweiten Druck auslenkbar ist, wobei die Messmembran ein erstes Volumen, welchem die erste Seite der Messmembran zugewandt ist, von einem zweiten Volumen, welchem die zweite Seite der Messmembran zugewandt ist, druckdicht trennt, wobei die Druckmesszelle weiterhin einen Wandler aufweist, zum Wandeln der druckabhängigen Auslenkung der Messmembran in ein elektrisches oder optisches Signal.

Gattungsgemäße Druckmesszellen sind beispielsweise in den Veröffentlichungen WO 2011/006741 A1, EP 0 373 536 A2 und WO2011/003730 A1 sowie den darin genannten Schriften offenbart. Einen Überblick über elektrische Wandlerprinzipien und eine Beschreibung der Verformung von Messmembranen und den resultierenden mechanischen Spannungen geben Pfeifer und Werthschützky in "Drucksensoren", Berlin, 1989. Im Sinne der Klarheit, sei darauf hingewiesen, dass die Nomenklatur in den genannten Veröffentlichungen nicht einheitlich ist. Die Messmembranen gemäß WO 2011/006741 A1, WO2011/003730 A1 bzw. der vorliegenden Erfindung sind Platten, insbesondere Kreisplatten im Sinne von Pfeifer und Werthschützky bzw. EP 0 373 536 A2.

Ein Problem der Messmembranen besteht in ihrer begrenzten Überlastfestigkeit. Einerseits sollen die Messmembranen hinreichend dünn sein um im angestrebten Messbereich mit verwertbarer Amplitude auslenkbar zu sein, und andererseits sollen sie einem Überlastdruck, der ein Mehrfaches des Messbereichs betragen kann, standhalten.

Um dennoch hinreichend empfindliche Messmembranen einsetzen zu können, sind Ansätze zum Überlastschutz der Messmembran durch Abstützen im Überlastfall bekannt, beispielsweise durch Membranbetten. Hierbei soll sich die Messmembran bei Überschreiten eines Grenzwerts für den Überdruck zumindest in dem Maße an dem Membranbett abstützen, dass die Berstspannung der Messmembran auch bei einem weiteren Druckanstieg nicht erreicht wird. Dafür sind insbesondere asphärische Membranbetten geeignet, welche die Biegelinie der Messmembran bei dem Grenzwert für den Überdruck approximiert. Entsprechende Membranbetten sind offenbart in US 4 458 537, DE 10 2009 046 229 A1, US 7 360 431 B2, DE 10 2010 028 773 A1, JP10078366A und US 5 381 299. Die Veröffentlichung EP 0 373 536 A2 offenbart einen Drucksensor, welche einen Stützring zur ringförmigen Abstützung der Messmembran im Falle einer Überlast vorsieht.

Die Druckschrift DE 10 2010 028 504 A1 offenbart einen Drucksensor mit einem Stützkörper mit einer planaren Oberfläche und mit einer Messmembran mit einer in der Ruhelage konkaven Oberfläche, die dem Stützkörper zugewandt ist. Wenn die Messmembran durch Druckbeaufschlagung von der dem Gegenkörper abgewandten Seite zum Gegenkörper hin ausgelenkt wird, nimmt die in der Ruhelage konkave Oberfläche genau bei dem Grad der Auslenkung eine planare Form ein, bei dem die Messmembran den Stützkörper berührt. Auf diese Weise wird eine vollflächige Abstützung der Messmembran erreicht, und ein weiterer Anstieg von mechanischen Spannungen in der Messmembran ist zuverlässig verhindert. Ein ähnlicher Ansatz ist in EP 0439 494 B1 beschrieben zudem weist die Messmembran einen gegenüber dem konkaven Bereich, dünneren, ringförmigen Randbereich auf, welcher den konkaven Bereich umgibt. Damit ist die Membran leichter auslenkbar, und die maximalen Spannungen im Randbereich fallen bei einer gegebenen Auslenkung der Messmembran geringer aus, als dies bei einer ungebrochenen Fortsetzung der konkaven Kontur bis zum äußeren Rand der Messmembran der Fall wäre.

Wenngleich sämtliche der vorbeschriebenen Ansätze zu einem gewissen Grad ihren Zweck erfüllen, gehen sie doch alle mit komplexeren Strukturen und den damit erhöhten Fertigungskosten einher. Es ist daher die Aufgabe der vorliegenden Erfindung eine einfache, überlastfeste Druckmesszelle bereitzustellen.

Die Aufgabe wird erfindungsgemäß gelöst durch die Druckmesszelle gemäß dem unabhängigen Patentanspruch 1.

Die erfindungsgemäße Druckmesszelle ist dadurch gekennzeichnet, dass die keramische Messmembran, zumindest in einem radialen Randbereich, in welchem im ausgelenkten Zustand der Messmembran unter Druckbeaufschlagung Zugspannungsmaxima auftreten, im Gleichgewichtszustand der Messmembran zumindest an der Oberfläche der Messmembran Druckspannungen vorliegen, wobei die Druckmesszelle erhalten wird durch ein Verfahren, welches das Bereitstellen eines gebrannten Messmembranrohlings umfasst, wobei die Messmembran nach dem Brennen auf ihre Sollstärke gebracht und eingeebnet, ist, insbesondere durch Schleifen und/oder Läppen, wodurch der Aufbau von Druckspannungen in oberflächennahen Schichten der Messmembran bewirkt ist, wobei die Druckspannungen durch eine lokale Temperaturbehandlung lokal abgebaut sind und zumindest innerhalb des radialen Randbereichs, in welchem im ausgelenkten Zustand der Messmembran unter Druckbeaufschlagung Zugspannungsmaxima auftreten erhalten bleiben.

Mit Gleichgewichtszustand ist ein Zustand der Messmembran beschrieben, in dem auf beiden Seiten der Messmembran der gleiche Druck ansteht.

In einer Weiterbildung der Erfindung erstreckt sich der radiale Bereich, in dem die Messmembran Druckspannungen aufweist, von einem minimalen Radius rₘᵢₙ zumindest bis zum äußeren Radius a des auslenkbaren Bereiches.

In einer Weiterbildung der Erfindung beträgt das Verhältnis zwischen dem minimalen Radius und dem äußeren Radius des auslenkbaren Bereichs rₘᵢₙ / r nicht weniger als 0,6 insbesondere nicht weniger als 0,7.

In einer Weiterbildung der Erfindung beträgt das Verhältnis zwischen dem minimalen Radius und dem äußeren Radius des auslenkbaren Bereichs rₘᵢₙ / r nicht mehr als 0,9 insbesondere nicht mehr als 0,85.

In einer Weiterbildung der Erfindung erstreckt sich der radiale Bereich, in dem die Messmembran Druckspannungen aufweist, über den äußeren Radius r des auslenkbaren Bereiches hinaus bis zu einem maximalen Radius rₘₐₓ, für den gilt rₘₐₓ / r ≥ 1,05, insbesondere ≥ 1,1.

In einer Weiterbildung der Erfindung weisen die Druckspannungen einen maximalen Wert von nicht weniger als 50 MPa, insbesondere nicht weniger als 80 MPa und bevorzugt nicht weniger als 100 MPa auf.

In einer Weiterbildung der Erfindung weist die Messmembran über ein Ringvolumen, das sich zwischen dem minimalen Radius rₘᵢₙ und dem maximalen Radius rₘₐₓ erstreckt, eine mittlere Druckspannung auf, die nicht weniger als 20 MPa, insbesondere nicht weniger als 40 MPa und bevorzugt nicht weniger als 80 MPa beträgt, wobei (rₘₐₓ - rₘᵢₙ) / r ≥ 0,1, wobei das Ringvolumen von einer Oberfläche der Messmembran eine Tiefe von beispielsweise nicht mehr als 20 µm insbesondere nicht mehr als 12 µm und beispielsweise nicht weniger als 5 µm insbesondere nicht weniger als 8 µm aufweist. Die Tiefe kann beispielsweise etwa 5% bis 10% der Stärke h der Messmembran betragen.

Die Erfindung wird nun anhand der in den Zeichnungen dargestellten Ausführungsbeispiele näher erläutert. Es zeigt:
- Fig. 1a:: eine schematische Membran einer eingespannten Membran;
- Fig. 1b:: einen Längsschnitt durch eine Druckmesszelle nach dem Stand der Technik
- Fig. 1c:: eine Darstellung der Radial- und Tangentialspannungen einer Messmembran einer Druckmesszelle nach dem Stand der Technik;
- Fig. 2a:: einen Längsschnitt durch ein Ausführungsbeispiel einer erfindungsgemäßen Druckmesszelle;
- Fig. 2b:: eine Darstellung der Radialspannung einer Messmembran einer erfindungsgemäßen Druckmesszelle;
- Fig. 3a:: einen Längsschnitt durch ein zweites Ausführungsbeispiel einer erfindungsgemäßen Druckmesszelle;
- Fig. 3b:: einen Längsschnitt durch ein zweites Ausführungsbeispiel einer erfindungsgemäßen Druckmesszelle; und
- Fig. 3c:: einen Längsschnitt durch ein zweites Ausführungsbeispiel einer erfindungsgemäßen Druckmesszelle.

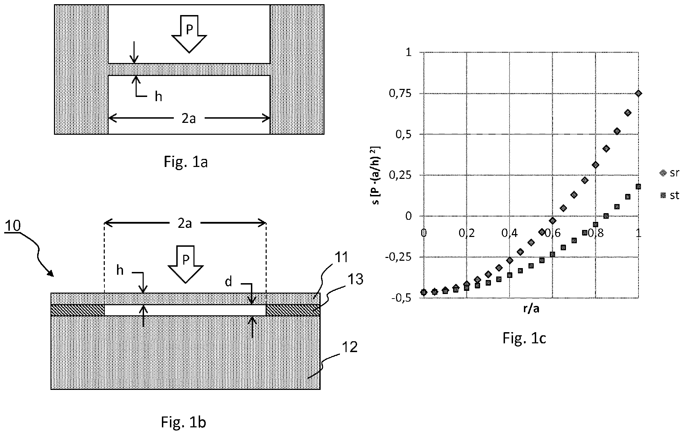

Die in Fig. 1a dargestellte Anordnung zeigt eine eingespannte Messmembran mit einem Radius a und einer Materialstärke h, für welche nach di Giovanni: "Flat and Corrugated Diaphragm Design Handbook" der in Fig 1c dargestellte Verlauf der Radial- und Tangentialspannungen gilt.

Die in Fig. 1b dargestellte Druckmesszelle 10, nach dem Stand der Technik umfasst eine keramische Messmembran 11 und einen keramischen Gegenkörper 12, welche entlang einer ringförmig umlaufenden Fügestelle 13, die ein Aktivhartlot oder Glas aufweist, druckdicht miteinander verbunden sind. Aufgrund der Steifigkeit der Fügestelle 13, verhält sich der auslenkbare Teil der Messmembran 11, der nicht von der Fügestelle unterstützt ist, im wesentlichen wie die eingespannte Membran aus Fig. 1a, so dass der in Fig 1c dargestellte Spannungsverlauf entsprechend auch für die Membran 11 der Druckmesszelle 10 aus Fig. 1c gilt. Demnach treten am Rand (r/a = 1) die größten Radialspannungen auf. Beispielsweise können bei einer Messmembran mit h = 250 µm und a = 12 mm bei einem Druck von p = 0,4 MPa am Rand radiale Zugspannungen von knapp 700 MPa auftreten. Diese Zugspannungen liegen oberhalb der gängigen Werte der Bruchspannung σ_{0,1} von Korund. Nach dem Stand der Technik wäre in diese Membran also nicht für einen Messbereich von 0,4 MPa (4 bar) geeignet. Durch Abstützen des Zentrums der Membran am Grundkörper können die radialen Zugspannungen im Randbereich der Membran reduziert werden. Beispielsweise kann mittels einer Fügestelle, die eine Stärke von etwa 35 µm aufweist, ein Abstand d entsprechender Größe zwischen Membran und Gegenkörper vorgegeben werden, so dass sich die Messmembran im Überlastfall am Grundkörper abstützt. Dies führt dazu, dass die radialen im Zugspannungen im Randbereich auf weniger als 350 MPa beschränkt bleiben, auch in dieser Situation können Werte der Bruchspannung σ_{0,1} gängiger Korundwerkstoffe erreicht sein. Die erfindungsgemäße Druckmesszelle bietet nun einen Ansatz die Zugspannungen so weit abzusenken, dass die Bruchspannung σ_{0,1} nicht erreicht wird.

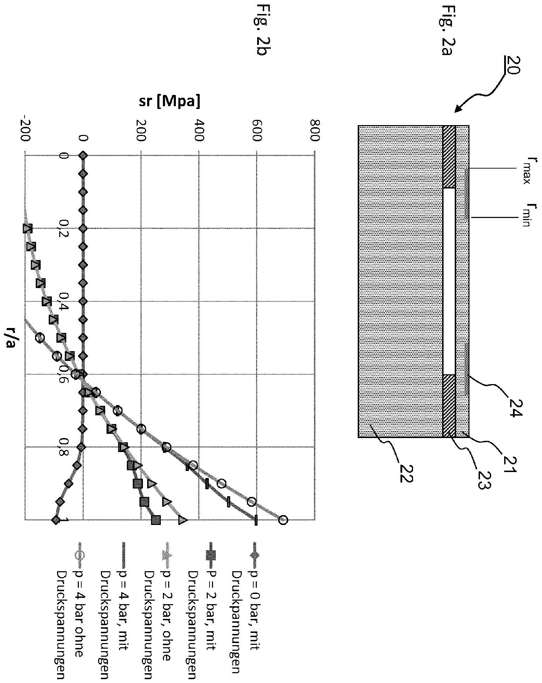

Die in Fig. 2a gezeigte erfindungsgemäße Druckmesszelle 20 überwindet diese Begrenzung folgendermaßen: Sie umfasst wie zuvor eine keramische Messmembran 21 und einen keramischen Gegenkörper 12, welche entlang einer ringförmig umlaufenden Fügestelle 23, die ein Aktivhartlot oder Glas aufweist, druckdicht miteinander verbunden sind. Strukturell sind also keine offensichtlichen Unterschiede zu erkennen. Jedoch weist die Messmembran 21 an ihrer dem Grundkörper abgewandten Oberfläche einen ringförmigen Bereich 24 auf, der im Gleichgewichtszustand der Messmembran Druckspannungen aufweist. Dieser Bereich wird unter Druckbeaufschlagung am stärksten gedehnt, so dass dort im Normalfall die größten Zugspannungen auftreten. Die in der Ruhelage vorhandenen Druckspannungen bewirken dagegen für den Bereich eine Verschiebung des Spannungsnullpunkts, so dass erst bei einer gewissen Dehnung des Bereichs aufgrund einer Druckbeaufschlagung eine von null verschiedene radiale Zugspannung auftritt. Dem entsprechend sind die resultierenden Zugspannungen bei einer weiteren Auslenkung der Messmembran 21 in dem oberflächennahen Bereich 24 reduziert, so dass die auftretenden maximalen Zugspannungen gegenüber der Druckmesszelle nach dem Stand der Technik reduziert. Dadurch kann die Druckmesszelle bei ansonsten gleicher Konstruktion über einen Druckbereich betrieben werden, ohne dass die auftretenden Zugspannungen oberhalb der gängigen Werte der Bruchspannung σ_{0,1} von Korund liegen.

Der Effekt ist in Fig. 2b verdeutlicht, wobei für Druckwerte von 2 bar und 4 bar, jeweils die Radialspannungen einer Messmembran mit und ohne präparierten Druckspannungen dargestellt sind. Die Kurven sind nicht das Ergebnis von Messungen oder einer numerischen Simulation, sondern sie beschreiben lediglich qualitativ, welche Spannungsbilanz eine Präparation von Druckspannungen im Randbereich einer Messmembran bewirken kann.

Insofern, als die Druckspannungen nur in einer oberflächennahen Schicht präpariert sind, ist eine dadurch bewirkte Veränderung der Gleichgewichtslage der Messmembran messtechnisch akzeptabel, d.h. es bleibt nich ein hinreichend großer druckabhängiger Hub. Selbstverständlich, muss jedoch diese Veränderung bei einer Übertragungsfunktion eines Wandlers der Druckmesszelle berücksichtigt werden.

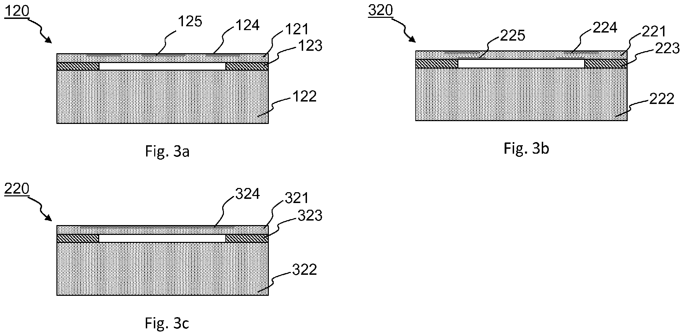

Die in den Figuren 3a, 3b und 3c gezeigten Ausführungsbeispiele betreffen Druckmesszellen, bei denen eine Nullpunktverschiebung aufgrund der zur Minimierung der maximalen Zugspannungen präparierten Druckspannungen durch Gegenmaßnahmen verringert bzw. vermieden werden soll. Grundsätzlich gilt die Beschreibung des ersten Ausführungsbeispiels aus Fig. 2a sinngemäß für die Ausführungsbeispiele der Fign. 3a, 3b und 3c. wobei die Bezugszeichen der entsprechenden Komponenten von einem Ausführungsbeispiel zum nächsten jeweils um 100 erhöht wurden.

Die in Fig. 3a dargestellte Druckmesszelle 120 weist eine Messmembran 121 auf, bei welcher eine ringförmige Randzone 124 an ihrer dem Grundkörper abgewandten Oberfläche Druckspannungen aufweist, um die in diesem Bereich bei einer Auslenkung der Messmembran auftretenden Zugspannungen zu verringern. Weiterhin weist ein zentraler oberflächennaher Bereich 125 der Messmembran Druckspannungen auf, welche einer Nullpunktverschiebung aufgrund der Druckspannungen in der Ringförmigen Randzone 124 entgegenwirken.

Die in Fig. 3b dargestellte Druckmesszelle 220 weist eine Messmembran 221 auf, bei welcher eine erste ringförmige Randzone 224 an ihrer dem Grundkörper abgewandten Oberfläche Druckspannungen aufweist, um die in diesem Bereich bei einer Auslenkung der Messmembran auftretenden Zugspannungen zu verringern. Weiterhin weist eine zweite ringförmige Randzone 225 an ihrer dem Grundkörper zugewandten Oberfläche Druckspannungen auf, welche einer Nullpunktverschiebung aufgrund der Druckspannungen in der ersten ringförmigen Randzone 224 entgegenwirken.

Die in Fig. 3c dargestellte Druckmesszelle 320 weist eine Messmembran 321 auf, bei welche zumindest über den gesamten auslenkbaren Bereich der eine erste ringförmige Randzone 324 an ihrer dem Grundkörper abgewandten Oberfläche zumindest über den gesamten auslenkbaren Bereich Druckspannungen aufweist, um die in dem Randbereich des auslenkbaren Bereichs bei einer Auslenkung der Messmembran auftretenden Zugspannungen zu verringern, und um einer Nullpunktverschiebung, wie sie bei einer Präparation von Druckspannungen ausschließlich im Randbereich der dem Grundkörper abgewandten Oberfläche ggf. auftreten können, entgegenwirken.

Für eine Feinabstimmung des Nullpunkts kann die Stärke der Druckspannungen in den verschiedenen Bereichen der Messmembran bei Bedarf variiert werden.

Zur Herstellung der erfindungsgemäßen Druckmesszellen werden keramische Messmembranen, die insbesondere Korund aufweisen nach dem Brennen auf ihre Sollstärke gebracht und eingeebnet, insbesondere durch Schleifen und/oder Läppen. Diese Oberflächenbehandlung bewirkt, den Aufbau von Druckspannungen in oberflächennahen Schichten der Messmembran, die nach dem Stand der Technik durch Glühen der Membranen vollständig abgebaut wurden.

Erfindungsgemäß erfolgt nun eine lokale Temperaturbehandlung, beispielsweise mit Laserpulsen, wodurch die Druckspannungen nur lokal abgebaut und in ausgewählten Bereichen gezielt erhalten bleiben.

## Patentansprüche

1. Druckmesszelle (20), welche eine elastische, keramische Messmembran (21) aufweist,
wobei die Messmembran (21) auf einer ersten Seite mit einem ersten Druck und auf einer der ersten Seite abgewandten, zweiten Seite mit einem zweiten Druck beaufschlagbar ist,
wobei die Messmembran (21) in Abhängigkeit einer Differenz zwischen dem ersten Druck und dem zweiten Druck auslenkbar ist, wobei die Messmembran (21) ein erstes Volumen, welchem die erste Seite der Messmembran (21) zugewandt ist, von einem zweiten Volumen, welchem die zweite Seite der Messmembran (21) zugewandt ist, druckdicht trennt, wobei die Druckmesszelle (20) weiterhin einen Wandler aufweist, zum Wandeln der druckabhängigen Auslenkung der Messmembran (21) in ein elektrisches oder optisches Signal, **dadurch gekennzeichnet, dass** die Messmembran (21) zumindest in einem radialen Randbereich (24), in welchem im ausgelenkten Zustand der Messmembran (21) unter Druckbeaufschlagung Zugspannungsmaxima auftreten, im Gleichgewichtszustand der Messmembran (21) zumindest an der Oberfläche der Messmembran (21) Druckspannungen vorliegen,
wobei die Druckmesszelle erhalten wird durch ein Verfahren, welches das Bereitstellen eines gebrannten Messmembranrohlings umfasst,
wobei die Messmembran nach dem Brennen auf ihre Sollstärke gebracht und eingeebnet, ist, insbesondere durch Schleifen und/oder Läppen, wodurch der Aufbau von Druckspannungen in oberflächennahen Schichten der Messmembran bewirkt ist,
wobei die Druckspannungen durch eine lokale Temperaturbehandlung lokal abgebaut sind und zumindest innerhalb des radialen Randbereichs (24), in welchem im ausgelenkten Zustand der Messmembran (21) unter Druckbeaufschlagung Zugspannungsmaxima auftreten, erhalten sind.

2. Druckmesszelle nach Anspruch 1, wobei der radiale Bereich, in dem die Messmembran (21) Druckspannungen aufweist, sich von einem minimalen Radius rₘᵢₙ zumindest bis zum äußeren Radius r des auslenkbaren Bereiches erstreckt.

3. Druckmesszelle nach Anspruch 2, wobei das Verhältnis zwischen dem minimalen Radius rₘᵢₙ zum äußeren Radius r des auslenkbaren Bereichs rₘᵢₙ / r nicht weniger als 0,6 insbesondere nicht weniger als 0,7 beträgt.

4. Druckmesszelle nach Anspruch 2 oder 3, wobei für das Verhältnis zwischen dem minimalen Radius rₘᵢₙ zum äußeren Radius r des auslenkbaren Bereichs rₘᵢₙ / r nicht mehr als 0,9 insbesondere nicht mehr als 0,85 beträgt.

5. Druckmesszelle nach Anspruch 2, 3 oder 4, wobei der radiale Bereich, in dem die Messmembran (21) Druckspannungen aufweist, sich über den äußeren Radius r des auslenkbaren Bereiches hinaus erstreckt bis zu einem maximalen Radius rₘₐₓ, für den gilt rₘₐₓ / r ≥ 1,05, insbesondere ≥ 1,1.

6. Druckmesszelle nach einem der vorhergehenden Ansprüche, wobei die Druckspannungen in der Gleichgewichtslage der Messmembran (21) einen maximalen Wert von nicht weniger als 50 MPa, insbesondere nicht weniger als 80 MPa und bevorzugt nicht weniger als 100 MPa aufweisen.

7. Druckmesszelle nach einem der Ansprüche 2 bis 6, wobei die Messmembran über ein Ringvolumen, das sich zwischen dem minimalen Radius rₘᵢₙ und dem maximalen Radius rₘₐₓ erstreckt, eine mittlere Druckspannung aufweist, die nicht weniger als 20 MPa, insbesondere nicht weniger als 40 MPa und bevorzugt nicht weniger als 80 beträgt,
wobei (rₘₐₓ - rₘᵢₙ) / r ≥ 0,1,
wobei das Ringvolumen von einer Oberfläche der Messmembran eine Tiefe von 0,05 h aufweist, wobei h die Stärke der Messmembran ist.

8. Verfahren zum Präparieren einer Messmembran für eine Druckmesszelle, insbesondere nach einem der vorhergehenden Ansprüche, umfassend die Schritte:
Bereitstellen eines gebrannten Membranrohlings, welcher einen keramischen Werkstoff aufweist;
Einbringen von Druckspannungen in den Membranrohling durch Oberflächenbehandlung wobei die Oberflächenbehandlung Schleifen und / oder Läppen umfasst; und
Verringern der Druckspannungen in mindestens einem ersten radialen Bereich,
**dadurch gekennzeichnet, dass**
die Druckspannungen in mindestens einem zweiten radialen Bereich erhalten bleiben bzw. weniger stark verringert werden, wobei das Verringern der Druckspannungen mittels lokaler thermischer Behandlung erfolgt.

9. Verfahren nach Anspruch 8, wobei die thermische Behandlung mittels Laserbestrahlung erfolgt.

## Claims

1. Pressure measuring cell (20), which has an elastic, ceramic process isolating diaphragm (21),
wherein the process isolating diaphragm (21) can be exposed to a first pressure on a first side, and to a second pressure on a second side facing away from the first side,
wherein the process isolating diaphragm (21) can be deflected depending on a difference between the first pressure and the second pressure, wherein the process isolating diaphragm (21) separates in a pressure-tight manner a first volume - to which the first side of the process isolating diaphragm (21) is facing - from a second volume - to which the second side of the process isolating diaphragm (21) is facing - wherein the pressure measuring cell (20) further comprises a converter which is designed to convert the pressure-dependent deflection of the process isolating diaphragm (21) to an electrical or optical signal, **characterized in that**, in the state of equilibrium of the process isolating diaphragm (21), compressive stresses occur at least at the surface of the process isolating diaphragm (21), at least in a radial marginal zone (24) in which maximum tensile stresses occur under the effect of pressure when the process isolating diaphragm (21) is in the deflected state,
wherein the pressure measuring cell is obtained using a method that comprises the provisioning of a fired blank of the process isolating diaphragm,
wherein, following the firing, the process isolating diaphragm is adjusted to its target thickness and leveled, particularly by grinding and/or lapping, which causes the build-up of compressive stresses in layers of the process isolating diaphragm that are close to the surface,
wherein the compressive stresses are reduced locally by local thermal treatment and maintained at least in the radial marginal zone (24) in which maximum tensile stresses occur under the effect of pressure when the process isolating diaphragm (21) is in the deflected state.

2. Pressure measuring cell as claimed in Claim 1, wherein the radial zone in which the process isolating diaphragm (21) displays compressive stresses extends from a minimum radius Tₘᵢₙ at least up to the outer radius r of the area that can be deflected.

3. Pressure measuring cell as claimed in Claim 2, wherein the ratio between the minimum radius rₘᵢₙ and the outer radius r of the area that can be deflected rₘᵢₙ / r is not less than 0.6, particularly not less than 0.7.

4. Pressure measuring cell as claimed in Claim 2 or 3, wherein the ratio between the minimum radius rₘᵢₙ and the outer radius r of the area that can be deflected rₘᵢₙ / r is not greater than 0.9, particularly not greater than 0.85.

5. Pressure measuring cell as claimed in Claim 2, 3 or 4, wherein the radial zone in which the process isolating diaphragm (21) displays compressive stresses extends beyond the outer radius r of the area that can be deflected to a maximum radius rₘₐₓ, wherein the following applies: rₘₐₓ / r ≥ 1.05, particularly ≥ 1.1.

6. Pressure measuring cell as claimed in one of the previous claims, wherein the compressive stresses in the state of equilibrium of the process isolating diaphragm (21) have a maximum value of not less than 50 MPa, particularly not less than 80 MPa and preferably not less than 100 MPa.

7. Pressure measuring cell as claimed in one of the Claims 2 to 6, wherein the process isolating diaphragm has an average compressive stress over an annular volume that extends between the minimum radius rₘᵢₙ and the maximum radius rₘₐₓ, said compressive stress being not less than 20 MPa, particularly not less than 40 MPa and preferably not less than 80 MPa,
wherein (rₘₐₓ - rₘᵢₙ) / r ≥ 0.1,
wherein the annular volume of a surface of the process isolating diaphragm has a depth of 0.05 h, where h is the thickness of the process isolating diaphragm.

8. Procedure designed for preparing a process isolating diaphragm for a pressure measuring cell, particularly as claimed in one of the previous claims, comprising the following steps:
Provision of a fired diaphragm blank which features a ceramic material;
Introduction of compressive stresses into the diaphragm blank by means of surface treatment, wherein the surface treatment comprises grinding and/or lapping; and
Reduction of compressive stresses in at least a first radial zone,
**characterized in that**
the compressive stresses are maintained in at least a second radial zone or are not reduced as strongly, wherein the reduction of compressive stresses is performed using local thermal treatment.

9. Procedure as claimed in Claim 8, wherein the thermal treatment is performed by laser irradiation.

## Revendications

1. Cellule de mesure de pression (20), laquelle comprend une membrane de mesure (21) céramique, élastique,
la membrane de mesure (21) pouvant être soumise, sur un premier côté, à une première pression et, sur un deuxième côté situé à l'opposé du premier côté, à une deuxième pression,
la membrane de mesure (21) étant apte à dévier en fonction d'une différence entre la première pression et la deuxième pression, la membrane de mesure (21) séparant de façon étanche à la pression un premier volume - auquel le premier côté de la membrane de mesure (21) fait face - d'un deuxième volume - auquel le deuxième côté de la membrane de mesure (21) fait face - la cellule de mesure de pression (20) comprenant en outre un convertisseur destiné à convertir la déviation fonction de la pression de la membrane de mesure (21) en un signal électrique ou optique, **caractérisée en ce que**, dans l'état d'équilibre de la membrane de mesure (21), la membrane de mesure (21) est soumise à des contraintes de compression au moins sur la surface de la membrane de mesure (21), au moins dans une zone marginale radiale (24) dans laquelle des maxima de contrainte de traction apparaissent sous l'effet de la pression, dans l'état dévié de la membrane de mesure (21),
la cellule de mesure de pression étant obtenue par un procédé, lequel comprend la mise à disposition d'une ébauche de membrane de mesure cuite,
la membrane de mesure étant amenée après la cuisson à son épaisseur nominale et aplanie, notamment par meulage et/ou rodage, ce qui a pour effet d'introduire des contraintes de compression dans les couches superficielles de la membranes de mesure,
les contraintes de compression étant diminuées localement au moyen d'un traitement thermique local et maintenues au moins dans la zone marginale radiale (24), dans laquelle apparaissent à l'état dévié de la membrane de mesure (21) des maxima de contrainte de traction sous l'effet de la pression.

2. Cellule de mesure de pression selon la revendication 1, pour laquelle la zone radiale, dans laquelle la membrane de mesure (21) présente des contraintes de compression, s'étend d'un rayon minimal Tₘᵢₙ au moins jusqu'au rayon extérieur r de la zone apte à dévier.

3. Cellule de mesure de pression selon la revendication 2, pour laquelle le rapport entre le rayon minimal rₘᵢₙ et le rayon extérieur r de la zone apte à dévier rₘᵢₙ / r n'est pas inférieur à 0,6, notamment pas inférieur à 0,7.

4. Cellule de mesure de pression selon la revendication 2 ou 3, pour laquelle le rapport entre le rayon minimal rₘᵢₙ et le rayon extérieur r de la zone apte à dévier rₘᵢₙ / r n'est pas supérieur à 0,9, notamment pas supérieur à 0,85.

5. Cellule de mesure de pression selon la revendication 2, 3 ou 4, pour laquelle la zone radiale, dans laquelle la membrane de mesure (21) présente des contraintes de compression, s'étend du rayon extérieur r de la zone apte à dévier jusqu'à un rayon maximal rₘₐₓ, pour lequel s'applique la relation rₘₐₓ / r ≥ 1,05, notamment ≥ 1,1.

6. Cellule de mesure de pression selon l'une des revendications précédentes, pour laquelle les contraintes de compression présentent, dans la position d'équilibre de la membrane de mesure (21), une valeur maximale d'au moins 50 MPa, notamment d'au moins 80 MPa et de préférence d'au moins 100 MPa.

7. Cellule de mesure de pression selon l'une des revendications 2 à 6, pour laquelle la membrane de mesure via un volume annulaire, qui s'étend entre le rayon minimal rₘᵢₙ et le rayon maximal rₘₐₓ, présente une contrainte de compression moyenne d'au moins 20 MPa, notamment d'au moins 40 MPa et de préférence d'au moins 80 MPa,
avec (rₘₐₓ - rₘᵢₙ) / r ≥ 0,1,
le volume annulaire d'une surface de la membrane de mesure présentant une profondeur de 0,05 h, h étant l'épaisseur de la membrane de mesure.

8. Procédé destiné à la préparation d'une membrane de mesure pour une cellule de mesure de pression, notamment selon l'une des revendications précédentes, comprenant les étapes suivantes :
Mise à disposition d'une ébauche de membrane cuite, laquelle présente un matériau céramique ;
Introduction de contraintes de compression dans l'ébauche de membrane via un traitement de surface, le traitement de surface consistant en un meulage et un rodage ; et
Diminution des contraintes de compression dans au moins une première zone radiale,
**caractérisé**
**en ce que** les contraintes de compression sont conservées ou moins fortement diminuées dans au moins une deuxième zone radiale, la diminution des contraintes de compression étant réalisée au moyen d'un traitement thermique local.

9. Procédé selon la revendication 8, pour lequel le traitement thermique est réalisé au moyen d'une irradiation laser.
